# EUROPÄISCHE PATENTANMELDUNG

(11) **EP 4 305 938 A1**
(43) Veröffentlichungstag der Anmeldung: **17.01.2024**
(21) Anmeldenummer: 23401022.1
(22) Anmeldetag: 14.07.2023
(51) Int. Cl.: A01B 17/00, A01B 73/00

(54) **BODENBEARBEITUNGSGERÄT**

(30) Priorität: 15.07.2022 DE 202022104019 U; 01.10.2022 DE 102022125442
(71) Anmelder: Lemken GmbH & Co KG, 46519 Alpen (DE)
(72) Erfinder: Schläwe, Andreas, 41352 Korschenbroich (DE); Siebers, Lukas, 47665 Sonsbeck (DE)

(57) **Zusammenfassung**

Es wird ein Bodenbearbeitungsgerät mit einem Transportfahrwerk vorgeschlagen, bei welchem sich von einem Mittelrahmen freitragend nach außen Bodenbearbeitungswerkzeuge erstrecken, wobei an einem jeweils freitragenden Ende eine Transportdeichsel und / oder ein Fahrwerk angeordnet werden kann.

## Beschreibung

Die Erfindung betrifft ein Bodenbearbeitungsgerät gemäß dem Oberbegriff des Schutzanspruches 1.

Aus dem deutschen Gebrauchsmuster DE 8 713 624 U1 ist ein Bodenbearbeitungsgerät bekannt, welches mit einer Fangvorrichtung durch einen Pflug in dessen jeweiliger Arbeitsrichtung mitgenommen wird und den durch den Pflug gewendeten Boden weiter rückverfestigt. Um das Bodenbearbeitungsgerät im öffentlichen Straßenverkehr zu transportieren, ist an einer Seite ein Dreipunktturm zum Anbau an ein Dreipunktgestänge eines Traktors vorgesehen, wie im Gebrauchsmuster DE 8 436 981 U1 in Figur 1 unten sowie in Figur 5 und 7 im oberen Figurenbereich gezeigt. Letzteres weist einen zentralen Rahmen auf, an welchem die Fangvorrichtung befestigt ist und von welchem sich beidseitig ringförmige Bodenbearbeitungswerkzeuge beabstandet erstrecken. Durch Aneinanderflanschen mehrerer Arbeitswerkzeuge kann die Arbeitsbreite variabel verändert und der jeweiligen Pflugbreite angepasst werden, wie zudem auch in DE 3 324 157 A1 dargestellt. Da die Geräte mit ihrer Arbeitsbreitenausrichtung quer zum Traktor angebaut werden, ist die Arbeitsbreite durch die zulässigen Transportbreiten begrenzt. Geräte größerer Arbeitsbreite sind daher klappbar oder mit einer Längsfahreinrichtung versehen, wie in EP 3 262 910 A1 oder GB 2 490 342 A vorgeschlagen. Beide Geräte aus vorstehenden Patentanmeldungen verfügen jedoch über einen umlaufenden Rahmen, welcher die Bodenbearbeitungswerkzeuge aufnimmt, in seiner Arbeitsbreite jedoch unveränderbar ausgebildet ist.

Aufgabe der Erfindung ist es, ein Bodenbearbeitungsgerät bereit zu stellen, welches mit einer Längsfahrvorrichtung im Straßenverkehr transportiert werden kann, zugleich aber modular in verschiedenen Arbeitsbreiten variabel breit ausgebildet ist und eine vereinfachte, kostengünstige Rahmenstruktur aufweist. Diese Aufgabe wird durch die Merkmale des kennzeichnenden Teiles des Anspruches 1 gelöst.

Ein Bodenbearbeitungsgerät ist mit einem mittigen Rahmen ausgestattet. An diesem Rahmen sind zumindest in einer Reihe drehbare Bodenbearbeitungswerkzeuge angeordnet. Hierzu enthält der Rahmen zumindest eine, vorzugsweise mehrere Lagerachsen, um welche zumindest eine Lagervorrichtung zur Lagerung der Bodenbearbeitungswerkzeuge drehbar mit dem Rahmen verbunden ist. Dabei erstrecken sich die Bodenbearbeitungswerkzeuge quer zu einer Arbeitsrichtung von dem mittigen Rahmen zu einem äußeren Ende des Bodenbearbeitungsgerätes und definieren dessen Arbeitsbreite, welche quer zur Arbeitsrichtung gemessen wird. Weiterhin ist das Bodenbearbeitungsgerät mit einem Fahrwerk ausgestattet, welches zumindest eine Transportachse sowie eine Transportdeichsel aufweist.

Die Transportdeichsel ist quer zur Arbeitsrichtung und vom äußeren Ende der Bodenbearbeitungswerkzeuge weiter nach außen ausgerichtet angeordnet. Dabei ist die Transportdeichsel am äußeren Ende der Bodenbearbeitungswerkzeuge über eine Aufnahmeeinrichtung in Verlängerung oder Flucht der zumindest einen Lagerachse mit dem äußeren Ende der Bodenbearbeitungswerkzeuge verbunden. Somit kann ein umlaufender Rahmen um das Bodenbearbeitungsgerät, welcher die Transportdeichsel ansonsten aufnehmen würde, entfallen. Stattdessen erfolgt die Verbindung der Transportdeichsel über die Aufnahmeeinrichtung und die drehbar gelagerten Bodenbearbeitungswerkzeuge unmittelbar zum zentral tragenden Rahmen des Bodenbearbeitungsgerätes. Durch die Anordnung der Aufnahmeeinrichtung in Flucht der Lagerachsen der Bodenbearbeitungswerkzeuge vorzugsweise an dessen äußeren Enden können diese eine beliebige Rotationsstellung relativ zum mittleren Rahmen einnehmen, ohne dass sich der oder die Anbringpunkte zur Aufnahmeeinrichtung dadurch verschieben.

In einer weiteren Erfindungsform des Bodenbearbeitungsgerätes ist die Aufnahmeeinrichtung in Verlängerung der zumindest einen Lagerachse mit dem äußeren Ende der Bodenbearbeitungswerkzeuge mittels einer Zentriervorrichtung verbunden. Dabei ist die Zentriervorrichtung als Zapfen ausgebildet, welcher mit einer konzentrisch zur Lagerachse ausgeformten Ausnehmung zusammenwirkt. Die Zentriervorrichtung ist vorzugsweise als Rotationslager, insbesondere als Gleit-, Rollen- oder Kugellager ausgebildet.

In einer ergänzenden Ausführungsform ist die Aufnahmeeinrichtung und/oder die Transportdeichsel mit einer weiteren Stützstrebe mit dem mittleren Rahmen verbunden. Die Stützstrebe kann materialsparender als ein umlaufender Rahmen ausgebildet sein. Dabei ist die Stützstrebe beabstandet von der zumindest einen Lagerachse angeordnet. Hierdurch entsteht eine verbesserte Krafteinleitung aus der Stützstrebe in den Mittelrahmen.

Bevorzugt weist die Aufnahmeeinrichtung eine oder mehrere Zentrierstreben auf. Diese verbinden die Transportdeichsel direkt oder mittelbar über die weitere Stützstrebe mit dem äußeren Ende der Bodenbearbeitungswerkzeuge auf Höhe der oder den Lagerachsen. Da die Zentrierstreben material- und kostensparend sowie leicht ausgeführt sind, können diese einfach vom Bediener von der Transportstellung in eine Arbeitsstellung verbracht werden, in welcher diese nicht mit den Bodenbearbeitungswerkzeugen in Verbindung stehen. Eine dauerhafte Wälzlagerung zwischen Aufnahmeeinrichtung und Bodenbearbeitungswerkzeugen kann dadurch eingespart werden.

Vorzugsweise ist die Stützstrebe längenveränderlich oder teleskopisch ausgebildet, um an verschiedene Arbeitsbreiten des Bodenbearbeitungsgerätes angepasst zu werden. Vorzugsweise wird dazu ein Einstell- oder Arretierungsraster verwendet, welches einem Halb der jeweiligen Unterschiede der Arbeitsbreiten zueinander entspricht.

In einer kompakten Ausführungsform des Bodenbearbeitungsgerätes ist die Transportdeichsel schwenkbar oder lösbar mit der Aufnahmeeinrichtung, den Bodenbearbeitungswerkzeugen und/oder dem mittleren Rahmen verbunden. Hierdurch steht die Transportdeichsel nicht unnötig weit über die Arbeitsbreite des Bodenbearbeitungsgerätes in dessen Arbeitsstellung hinaus ab. Insbesondere die nahe Vorbeifahrt an Feldgrenzen wird hiermit ermöglicht, ohne benachbarte Pflanzen oder Zauninstallationen zu beschädigen. Alternativ und zusätzlich wird auch die Vorbeifahrt mit einem Pflug verbessert, welcher mittels Fangarm und Fanggestänge das Bodenbearbeitungsgerät am Vorgewende eines Ackerfeldes aufnimmt und mitschleppt.

In einer verbesserten Erfindungsform weist das Bodenbearbeitungsgerät zumindest eine erste und zweite Reihe von Bodenbearbeitungswerkzeugen auf, wobei die Lagerachsen zur Lagerung der Bodenbearbeitungswerkzeuge parallel zueinander ausgerichtet sind. Hierdurch entsteht eine seitlich beanstandete Doppel- oder Mehrfachaufnahme für die Aufnahmeeinrichtung der Transportdeichsel in der Flucht der Lagerachsen, welche das Fahrverhalten des längsgefahrenen Bodenbearbeitungsgerätes stabilisiert. Zugleich wird die Arbeitsintensität der Bodenbearbeitungswerkzeuge verbessert.

In einer weiteren Erfindungsform sind die Bodenbearbeitungswerkzeuge aus einer Reihe von aneinander flanschbaren Werkzeugen wie Ringen, Scheiben, Sternen oder Rädern gebildet, welche beabstandet vom mittigen Rahmen an zumindest einer Flanschnabe der Lagervorrichtung oder gegeneinander geflanscht angeordnet sind. Hierdurch kann die Arbeitsbreite des Bodenbearbeitungsgerätes durch einfaches Hinzufügen oder Wegnehmen von Bodenbearbeitungswerkzeugen variabel und aus dem Baukasten verändert werden, ohne dabei an einem umlaufenden Rahmen gebunden zu sein. Da die Aufnahmeeinrichtung am äußeren Ende der im Abstand zueinander angeordneten Bodenbearbeitungswerkzeuge des Bodenbearbeitungsgerätes angeordnet ist, verschiebt sie sich entsprechend mit zunehmender Arbeitsbreite, ohne dass die Geometrie der Aufnahmeeinrichtung oder deren Verbindung mit einem oder mehreren Bodenbearbeitungswerkzeugen verändert werden muss.

In einer optimierten Erfindungsform des Bodenbearbeitungsgerätes ist das Fahrwerk am mittigen Rahmen befestigt und die zumindest eine Transportachse abnehmbar oder aushebbar ausgebildet. Da der mittlere Rahmen zugleich die Lagerkräfte aus dem Betrieb des Bodenbearbeitungsgerätes aufnimmt und entsprechend dimensioniert ist, können die Aufsattelkräfte des Fahrwerks im Transportbetrieb zentral durch den Mittelrahmen aufgenommen werden. Die Stütz- und Führungskräfte der Transportdeichsel werden hingegen über die Bodenbearbeitungswerkzeuge und deren Lagervorrichtung in den Mittelrahmen eingeleitet.

In einer weiteren Erfindungsform ist das Fahrwerk am äußeren Ende der Bodenbearbeitungswerkzeuge befestigt und das Fahrwerk oder dessen Transportachsen abnehmbar und / oder aushebbar ausgebildet.

Analog zur vorderen Anordnung der Transportdeichsel kann auch das Fahrwerk am gegenüberliegenden Ende der Bodenbearbeitungswerkzeuge angeordnet werden. Der mittige Rahmen des Bodenbearbeitungsgerätes bedarf hierdurch keiner konstruktiven Änderung. Die Modularität wird hierdurch insgesamt verbessert und eröffnet auch Nachrüstlösungen an vorhandenen Geräten.

In einer verbesserten Erfindungsform sind die Transportachsen des Bodenbearbeitungsgerätes mittels einem oder mehrerer Radarme schwenkbar oder verschiebbar am Mittelrahmen angeordnet. Damit können diese am Bodenbearbeitungsgerät verbleiben und in der Arbeitsstellung über die Bodenoberfläche ausgehoben und in Transportstellung so weit abgesenkt werden, bis eine ausreichende Bodenfreiheit für die Bodenbearbeitungswerkzeuge bei Straßenfahrt erreicht ist.

Weiterhin wird vorgeschlagen, dass die Schwenk- oder Verschiebebewegung des Fahrwerkes oder der Radarme mittels zumindest eines Aktors ausgeführt oder eingeleitet wird. Durch eine Fernbetätigung in Form eines oder mehrerer Aktoren kann das Fahrwerk einfach von der Transport- in die Arbeitsstellung und umgekehrt verbracht werden. Vorzugsweise ist ein solcher Aktor als Fluidzylinder oder ähnlicher motorischer Antrieb ausgebildet, welcher direkt oder mittels einer Getriebeanordnung auf die Radarme wirkt und vorzugsweise zwischen Mittelrahmen und Radarmen angeordnet und mit diesen wirksam verbunden ist. Alternativ kann der Aktor als manuell betätigte Zug- oder Druckwinde ausgebildet sein.

Die Erfindung zeichnet sich insbesondere dadurch aus, dass ein Bodenbearbeitungsgerät mit freitragend abstehenden Bodenbearbeitungswerkzeugen variabel verbreitert werden kann und mittels eines Fahrwerkes und einer an einem Ende der freitragend abstehenden Bodenbearbeitungswerkzeuge angeordneten Transportdeichsel in Längsfahrt transportiert werden kann, ohne dass die variabel ausgestaltbare Arbeitsbreite zulässige Breitenabmessungen im Straßenverkehr überschreitet.

Weitere Einzelheiten und Vorteile des Erfindungsgegenstandes ergeben sich aus der nachfolgenden Beschreibung und den zugehörigen Zeichnungen, in denen ein Ausführungsbeispiel mit den dazu notwendigen Einzelheiten und Einzelteilen dargestellt ist. Es zeigen:
Fig.1 ein Bodenbearbeitungsgerät in Draufsicht, welches in Arbeitsstellung hinter einem vorweglaufenden Pflug gezogen wird,
Fig.2 das Bodenbearbeitungsgerät in Transportposition in einer Perspektive,
Fig.3 das Bodenbearbeitungsgerät aus Fig. 2 in Seitenansicht hinter einem Traktor,
Fig. 4 Details der Transportdeichsel sowie
Fig. 5 Details des Transportfahrwerkes jeweils aus Fig. 2,
Fig. 6 eine weitere Ausführungsvariante zu Fig. 3,
Fig. 7 eine weitere Ausführungsvariante zu Fig. 4 und
Fig. 8 und 9 eine weitere Ausführungsvariante des Transportfahrwerkes zu Fig. 2 und 5

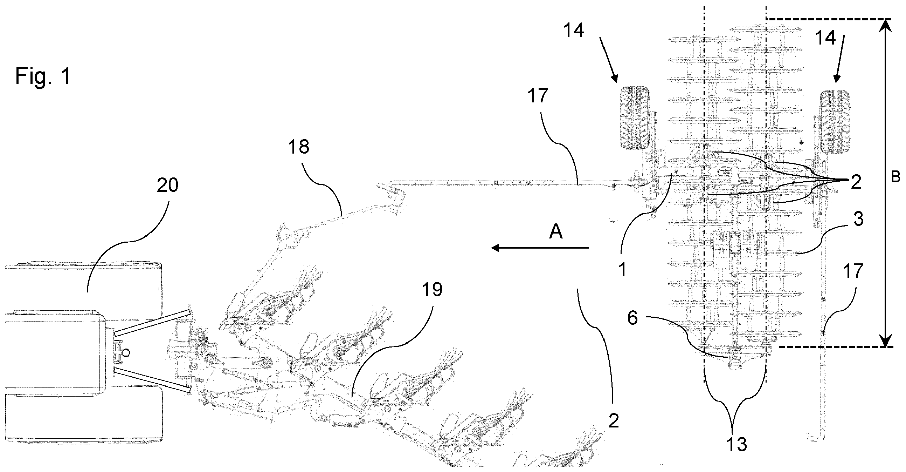

Figur 1 zeigt analog zu DE8713624U1 einen Pflug 19, welcher an einen Traktor 20 angebaut ist und mit welchem eine Bodenoberfläche eines Ackerfeldes bearbeitet wird. Die bearbeitete, durch den Pflug 19 gelockerte Bodenoberfläche wird durch ein folgendes Bodenbearbeitungsgerät 15 in einer Arbeitsbreite B weiter bearbeitet, insbesondere gekrümelt und/oder rückverfestigt. Die Arbeitsbreite B wird durch Bodenbearbeitungswerkzeuge 3 definiert, welche zumindest nebeneinander und quer zu einer Arbeitsrichtung A des Bodenbearbeitungsgerätes 15 beabstandet angeordnet sind. Dargestellt sind ringförmige Bodenbearbeitungswerkzeuge 3 zum Schneiden und Rückverfestigen des Ackerbodens. Diese sind drehbar um zumindest eine, im vorliegenden Beispiel zwei Lagerachsen an Lagervorrichtungen 2 befestigt, welche die Bodenbearbeitungswerkzeuge 3 drehbar mit dem Mittelrahmen 1 verbinden. Die Reihen von Bodenbearbeitungswerkzeugen 3 erstrecken sich etwa symmetrisch vom Mittelrahmen 1 zum jeweils äußeren Ende des Bodenbearbeitungsgerätes 15. Durch den Versatz der Werkzeuge der jeweiligen Reihen zueinander wirken diese intensiver und können optional zu Selbstreinigungszwecken ineinandergreifen. Das Bodenbearbeitungsgerät 15 wird über einen Mitnehmerarm 18 des Pfluges 19, welcher in einem Fangarm 17 verhakt, seitlich hinter dem Pflug in Arbeitsrichtung A mitgezogen. Am Rahmen 1 sind jeweils in Arbeitsrichtung A gegenüberliegend zwei Fangarme 17 seitlich schwenkbar angeordnet, derart, dass mittels eines Koppelgestänges die Fangarme 17 etwa im senkrechten Winkel zueinander stehen. Je nach Fahrtrichtung des Pfluges 19 verfängt der eine oder der andere Fangarm 17 im Mitnehmerarm 18 des vorbeifahrenden Pfluges 19. Das Bodenbearbeitungsgerät 15 richtet sich mit seinen Arbeitswerkzeugen 3 beziehungsweisen den Lagerachsen 2 quer zur gewählten Arbeitsrichtung A aus. Der jeweils mit dem Mitnehmerarm 18 verhakte Fangarm 17 richtet sich in Arbeitsrichtung aus, während der gegenüberliegende Fangarm in die zukünftige, nächste Fangstellung verschwenkt. Das Bodenbearbeitungsgerät 15 ist mit einem Transportfahrwerk 14 sowie einer Transportdeichsel 7 für den Straßentransport versehen, welche in vorliegender Arbeitsstellung hochgeklappt sind, um die gelockerte Bodenoberfläche nicht zu berühren und nicht mit dem während des Fangvorganges vorbeifahrenden Pfluges 14 zu kollidieren.

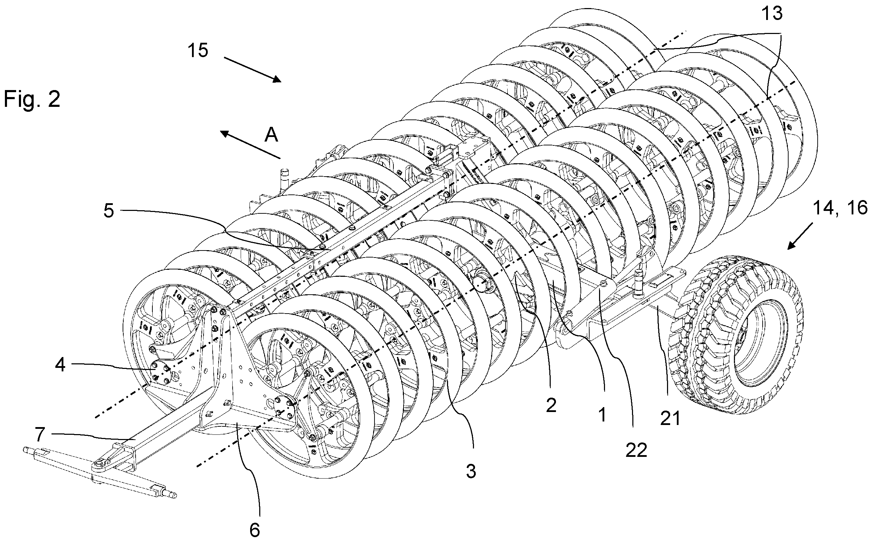

Figur 2 zeigt das Bodenbearbeitungsgerät 15 in einer perspektivischen Darstellung. Wie zuvor beschrieben, erstrecken sich zwei Reihen von Bodenbearbeitungswerkzeugen 3 parallel entlang der Lagerachsen 13 und beidseitig des Mittelrahmens 1 und sind an Lagervorrichtungen 2 geflanscht. Die weiteren Bodenbearbeitungswerkzeuge 3 sind freitragend nach außen aneinander geflanscht. Die Befestigung der Bodenbearbeitungswerkzeugen 3 zueinander oder an die Lagervorrichtungen 2 erfolgt mittels Distanzstücke und Befestigungsmittel, welche einzeln montiert oder an die Bodenbearbeitungswerkzeuge 3 angeformt sein können. Beidseitig des Mittelrahmens und vorzugsweise im Abstand zu den Lagerachsen 2 ist am Mittelrahmen 1 ein Fahrwerk 14 angeordnet, auf dem das Bodenbearbeitungsgerät 15 zu Transportzwecken aufgesattelt werden kann.

An einem Ende des Bodenbearbeitungsgerätes 15 ist eine Aufnahmeeinrichtung 6 an einem oder vorzugsweise mehreren der äußeren Bodenbearbeitungswerkzeuge 3 mittels einer oder mehrerer Zentriervorrichtungen 4 befestigt.

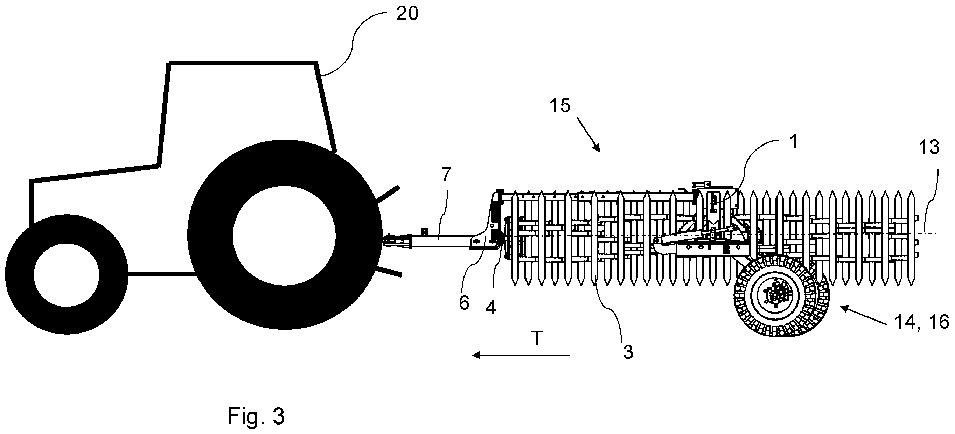

Figur 3 zeigt das Bodenbearbeitungsgerät 15 in Transportstellung, welches mittels der Transportdeichsel 7 an einem Traktor angehängt ist und in Transportrichtung T fortbewegt wird. In Transportstellung sind die Lagerachsen 13 und entlang dieser die am Mittelrahmen 1 freitragend befestigten und davon abstehenden Bodenbearbeitungswerkzeuge 3 in etwa parallel zur Transportrichtung T ausgerichtet.

Das Fahrwerk 14 mit deren Transportachsen und daran drehbar befestigten Rädern ist relativ zum Mittelrahmen 1 in eine Aushubstellung verschwenkt, damit eine ausreichende Transportbodenfreiheit zu den Bodenbearbeitungswerkzeugen entsteht.

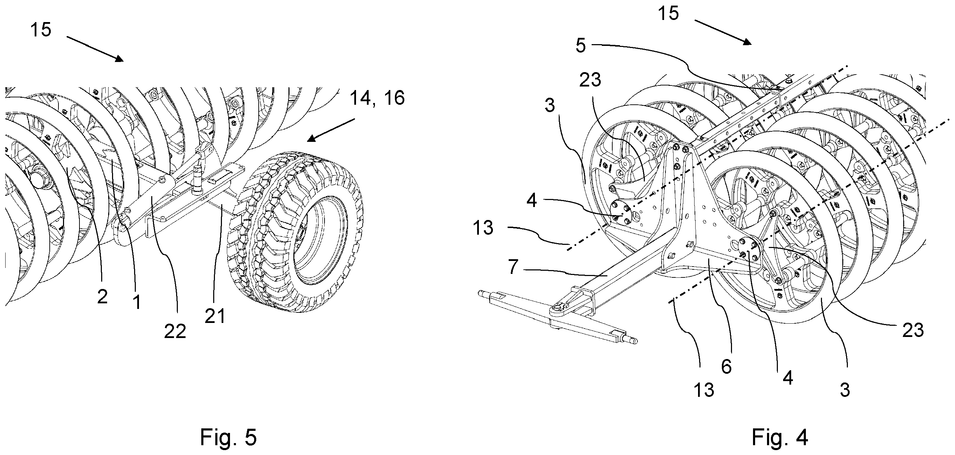

Wie in Figur 4 dargestellt, ist an einem Ende des Bodenbearbeitungsgerätes 15 eine Aufnahmeeinrichtung 6 an einem oder vorzugsweise mehreren der äußeren Bodenbearbeitungswerkzeuge 3 mittels einer oder mehrerer Zentriervorrichtungen 4 befestigt auf Höhe oder in Flucht der Lagerachsen 13 angeordnet. Weiter abstehend vom äußeren Ende des Bodenbearbeitungsgerätes 15 in Richtung der Lagerachsen 13 erstreckt sich eine Transportdeichsel 7. Diese ist vertikal schwenkbar mit der Aufnahmeeinrichtung 6 verbunden, um in Arbeitsstellung außerhalb eines möglichen Kollisionsbereiches arretiert zu werden. In der dargestellten Transportstellung der Transportdeichsel 7 ist an deren freien Ende optional eine Anhängeschiene angeordnet, mit welcher das Bodenbearbeitungsgerätes 15 an den Unterlenkern eines Traktors gekuppelt und mit diesen endseitig ausgehoben werden kann. Ohne Zugschiene kann eine direkte Anhängung in ein Zugpendel oder eine Anhängekupplung des Traktors 20 oder jedwedes andere Fahrzeug oder vorlaufendes Arbeitsgerät in Transportstellung erfolgen.

Die Zentriervorrichtungen 4 sind beispielsweise als Flanschlager ausgebildet, welche unmittelbar oder über einen jeweiligen Zentrierflansch 23 mit den äußeren Bodenbearbeitungswerkzeugen 3 verbunden sind. Vorzugsweise erfolgt dies an den zu Figur 2 vorgenannten Flanschpunkten und Befestigungsmitteln der Bodenbearbeitungswerkzeuge 3. Vorliegend sind drei Flanschpunkte in einem Winkel von 120 Grad zueinander um die Lagerachsen 13 auf einem Teilkreis an den Bodenbearbeitungswerkzeugen 3 angeordnet. Im oberen Bereich der Aufnahmeeinrichtung 6 ist diese rückwärts zum Mittelrahmen 1 hin über eine Stützstrebe 5 stabilisiert. Für eine variable Montage verschieden vieler oder in ihrer Breite unterschiedlicher Bodenbearbeitungswerkzeuge 3 ist die Stützstrebe 5 längenveränderlich ausgebildet. Dies kann stufenlos, oder wie vorliegend dargestellt, mittels beanstandeter Arretierungsmittel erfolgen.

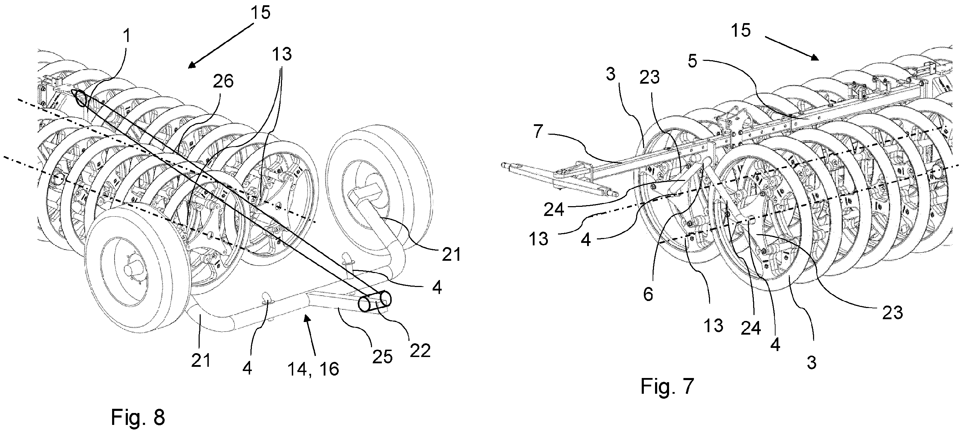

Figur 7 zeigt eine weitere Ausführungsvariante ähnlich wie in Figur 4. Die Transportdeichsel 7 steht in Verlängerung der Stützstrebe 5 über das Ende des Bodenbearbeitungsgerätes 15 in Transportrichtung T hinaus. Auf Höhe der äußeren Bodenbearbeitungswerkzeuge 3 verbinden die Zentrierstreben 24 zumindest mittelbar die Transportdeichsel 7 mit den Bodenbearbeitungswerkzeugen 3 über die dargestellten Zentrierflansche 23 und bilden insgesamt die Aufnahmeeinrichtung 6. Dabei sind die Zentrierstreben 24 vorzugsweise als U- oder S-förmige Bügel ausgebildet. Zumindest die bodenbearbeitungswerkzeugseitigen Enden der Zentrierstreben 24 sind als runde Zentriervorrichtungen 4 ausgebildet und ragen direkt in eine korrespondierende Öffnung der Zentrierflansche und werden axial in Richtung der Achsen 13 gegen Herausfallen gesichert. Für den Arbeitsbetrieb des Bodenbearbeitungsgerätes 15 können die Zentrierstreben entnommen oder von den Bodenbearbeitungswerkzeugen 3 weggeschwenkt werden. Alternativ können die Zentriervorrichtungen 4 auch bolzenförmig ausgebildet sein und die Zentrierstreben 24 und die Zentrierflansche 23 drehbar und vorzugsweise lösbar miteinander verbinden.

In Figur 5 sind außerhalb der Bodenbearbeitungswerkzeuge 3 rechts und links des Mittelrahmens 1 Transportachsen 16 des Fahrwerkes 14 an diesem angeordnet. Die Transportachsen 16 bestehen aus einem Radarm 21, an dessen äußeren Ende eine oder mehrere drehbar gelagerte Radnaben mit einem oder mehreren Transporträdern angeordnet sind. Das andere Ende des Radarmes 21 ist schwenkbar am Mittelrahmen 1 des Bodenbearbeitungsgerätes 15 angeordnet. Der Radarm 21 kann mittels eines Aktors 22, welcher zwischen einem Teil des Mittelrahmens 1 und einem abstehenden Hebel des Radarmes 21 angeordnet ist, von einer dargestellten, unteren Stellung in eine obere Stellung verschwenkt werden. Vorzugsweise ist der Aktor 22 als Fluidzylinder ausgebildet und kann von einer Druckquelle des Traktors 20 oder einer Handpumpe betätigt werden. Formen mechanischer oder elektrischer Winden können ebenfalls als Aktor verwendet werden. Bis zum Erreichen der unteren Stellung des Radarmes 21 hebt der Aktor das Bodenbearbeitungsgerät 15 in die Transportstellung aus. In entgegengesetzter Richtung kann der Radarm und damit die Transportachse 16 in eine obere Stellung verfahren werden, in welcher das Fahrwerk 14 mit seinen Transportachsen 16 keinen Bodenkontakt mehr aufweist. Dies ist die zu Figur 1 beschriebene Arbeitsstellung.

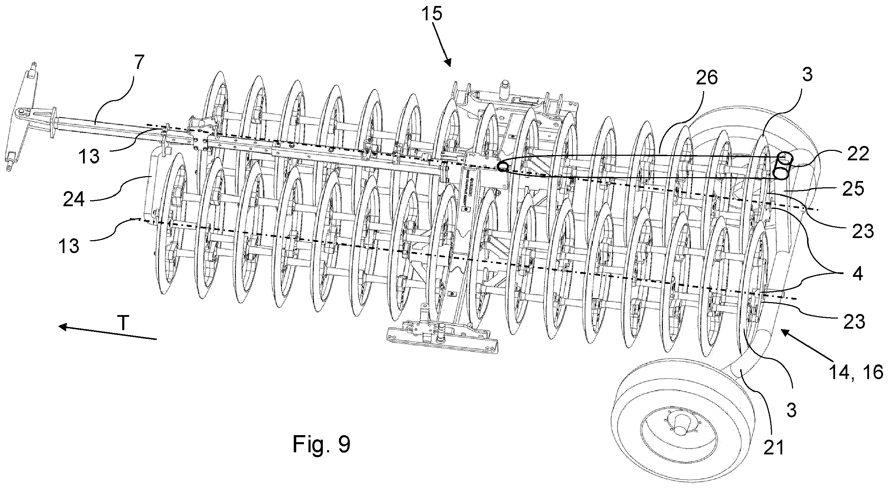

Alternativ zu Figur 5 zeigen Figur 8 und 9 eine Anordnung des Fahrwerkes 14, welches an den Bodenbearbeitungswerkzeugen 3 des Bodenbearbeitungsgerätes 15 endseitig angebracht ist. Die Transportachse 16 des Fahrwerkes 14 ist als Portalachse mit beidseitigen Radarmen 21 und daran drehbar befestigten Rädern ausgebildet. Das Fahrwerkes 14 weist zwei zueinander beabstandete Zentriervorrichtungen 4 auf. Diese sind quer zur Transportachse 21 und im Abstand der beiden Lagerachsen 13 fluchtend mit diesen angeordnet. Das Fahrwerk 14 kann manuell vor das Bodenbearbeitungsgerät gefahren werden, bis die vorzugsweise hakenförmigen Zentriervorrichtungen 4 in die Ausnehmungen der Zentrierflansche 23 eingreifen. Diese sind endseitig an den letzten Bodenbearbeitungswerkzeugen 3 angeflanscht. Durch das Anheben des Fahrwerkes mit dem rückwärtig abstehenden Hebel 25 wird das Bodenbearbeitungsgerät, wie in Figur 9 dargestellt, ausgehoben. Hierzu ist der Hebel 25 über einen beispielsweise als Seilwinde dargestellten Aktor 22 und ein Zugseil mit dem Mittelrahmen 1 verbunden. Durch Betätigen des Aktors richtet sich der Hebel 25 und somit das Fahrwerk 14 auf. In der umgekehrten Reihenfolge kann das Bodenbearbeitungsgerät 15 abgesenkt und das Fahrwerk 14 von diesem abgenommen werden. Durch die dargestellte, gebogene Form der Zentriervorrichtungen 4 können sich diese in ausgehobener Stellung des Fahrwerkes mit den Zentrierflanschen formschlüssig verriegeln. Alternativ sind Steckbolzen als Verliersicherung denkbar.

In einer besonders leicht zu betätigenden Ausführungsform sind der als Winde ausgebildete Aktor 22 und das zugehörige Zugseil als Flaschenzug ausgeführt. Alternativ kann der Aktor 22 als hydraulischer Zug- oder Druckzylinder zwischen dem Hebel 25 des Fahrwerkes 14 und dem Mittelrahmen 1 ausgebildet und angeordnet sein, um das Fahrwerk 14 relativ zum Bodenbearbeitungsgerät aufzurichten.

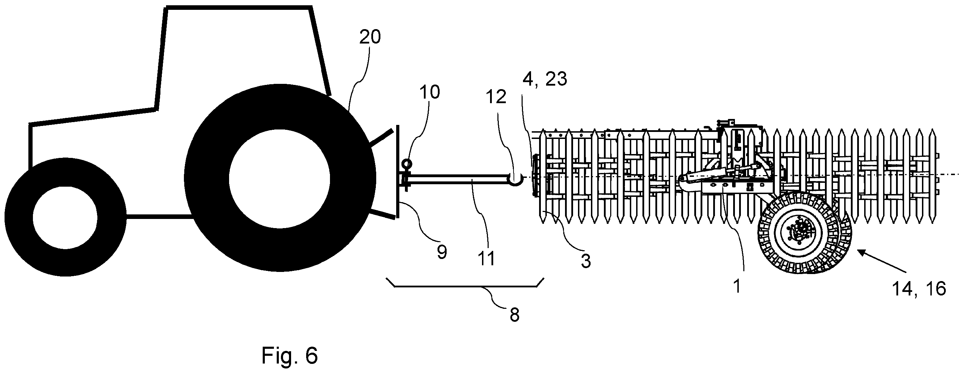

In Figur 6 wird eine alternative Ausführung zur Darstellung aus Figur 3, gezeigt, welche die Anhängung des Bodenbearbeitungsgerätes 15 an den Traktor 20 darstellt. An die Dreipunkthydraulik eines Traktors 20 ist eine Schnellkuppelvorrichtung 8 mit einem Kuppelrahmen 9 gekoppelt. Von dem Kuppelrahmen 9 erstreckt sich ein Kuppelarm 11 mit zumindest einer endseitigen, vorzugsweise hakenförmigen Schnellkupplung 12, welche beim Ausheben der Schnellkuppelvorrichtung 8 durch die Dreipunkthydraulik des Traktors 20 direkt in einer oder mehreren Zentriervorrichtungen 4, 23 der äußeren Bodenbearbeitungswerkzeuge 3 verfängt und gesichert werden kann. Bei Verwendung mehrerer Schnellkupplungen 12 ist der Kuppelarm 11 beweglich mit dem Kuppelrahmen 9, beispielsweise über ein Bolzengelenk 10, verbunden. Alternativ kann bei Verwendung einer einzigen Schnellkupplung 12 die Verbindung des Kuppelarmes 11 zum Kuppelrahmen 9 starr erfolgen. Die Lenkbarkeit des Bodenbearbeitungsgerätes 15 zum Traktor 20 wird dann anstelle des Bolzengelenkes 10 über die Schnellkupplung 12 in mehreren Freiheitsgraden gewährleistet.

Es folgen 7 Blatt mit Zeichnungen.

### BEZUGSZEICHENLISTE

| | |
|---|---|
| 1 | Rahmen |
| 2 | Lagervorrichtung |
| 3 | Bodenbearbeitungswerkzeuge |
| 4 | Zentriervorrichtung |
| 5 | Stützstrebe |
| 6 | Aufnahmeeinrichtung |
| 7 | Transportdeichsel |
| 8 | Schnellkuppelvorrichtung |
| 9 | Kuppelrahmen |
| 10 | Bolzengelenk |
| 11 | Kuppelarm |
| 12 | Schnellkupplung |
| 13 | Lagerachse |
| 14 | Fahrwerk |
| 15 | Bodenbearbeitungsgerät |
| 16 | Transportachse |
| 17 | Fangarm |
| 18 | Mitnehmerarm |
| 19 | Pflug |
| 20 | Traktor |
| 21 | Radarm |
| 22 | Aktor |
| 23 | Zentrierflansch |
| 24 | Zentrierstrebe |
| 25 | Hebel |
| 26 | Zugseil |

## Patentansprüche

1. Bodenbearbeitungsgerät (15) mit einem mittigem Rahmen (1), mit am Rahmen (1) drehbar angeordnete Bodenbearbeitungswerkzeugen (3), mit zumindest einer Lagervorrichtung (2) und zumindest einer Lagerachse (13) zur Lagerung der Bodenbearbeitungswerkzeuge (3), wobei die Bodenbearbeitungswerkzeuge (3) quer zu einer Arbeitsrichtung (A) von dem mittigen Rahmen (1) zu einem äußeren Ende sich erstreckend angeordnet sind, wobei das Bodenbearbeitungsgerät (15) weiterhin ein Fahrwerk (14) mit zumindest einer Transportachse (16) sowie eine Transportdeichsel (7) aufweist,
**dadurch gekennzeichnet,**
**dass** die Transportdeichsel (6) quer zur Arbeitsrichtung (A) und vom äußeren Ende der Bodenbearbeitungswerkzeuge (3) weiter nach außen ausgerichtet angeordnet ist, wobei die Transportdeichsel (7) am äußeren Ende der Bodenbearbeitungswerkzeuge (3) eine Aufnahmeeinrichtung (6) aufweist, welche in Verlängerung der Lagerachse (13) mit dem äußeren Ende der Bodenbearbeitungswerkzeuge (3) verbunden ist.

2. Bodenbearbeitungsgerät nach Anspruch 1,
**dadurch gekennzeichnet,**
**dass** die Aufnahmeeinrichtung (6) in Verlängerung der Lagerachse (13) mit dem äußeren Ende der Bodenbearbeitungswerkzeuge mittels einer Zentriervorrichtung (4) verbunden ist.

3. Bodenbearbeitungsgerät nach Anspruch 1 oder 2,
**dadurch gekennzeichnet,**
**dass** die Aufnahmeeinrichtung (6) und/oder die Transportdeichsel (7) mit einer weiteren Stützstrebe (5) mit dem mittleren Rahmen (1) verbunden ist.

4. Bodenbearbeitungsgerät nach vorstehenden Ansprüchen,
**dadurch gekennzeichnet,**
**dass** die Aufnahmeeinrichtung (6) eine oder mehrere Zentrierstreben aufweist, welche die Transportdeichsel (7) direkt oder mittelbar über die weitere Stützstrebe (5) mit dem äußeren Ende der Bodenbearbeitungswerkzeuge (3) auf Höhe der oder den Lagerachsen (13) verbindet.

5. Bodenbearbeitungsgerät nach vorstehenden Ansprüchen,
**dadurch gekennzeichnet,**
**dass** die Stützstrebe (5) längenveränderlich oder teleskopisch ausgebildet ist.

6. Bodenbearbeitungsgerät nach vorstehenden Ansprüchen,
**dadurch gekennzeichnet,**
**dass** die Transportdeichsel (7) schwenkbar oder lösbar mit der Aufnahmeeinrichtung (6), den Bodenbearbeitungswerkzeugen (3) und/oder dem mittleren Rahmen (1) verbunden ist.

7. Bodenbearbeitungsgerät nach vorstehenden Ansprüchen,
**dadurch gekennzeichnet,**
**dass** das Bodenbearbeitungsgerät (15) zumindest eine erste und zweite Reihe von Bodenbearbeitungswerkzeugen (3) aufweist, wobei die Lagerachsen (13) zur Lagerung der Bodenbearbeitungswerkzeuge (3) parallel zueinander ausgerichtet sind.

8. Bodenbearbeitungsgerät nach vorstehenden Ansprüchen,
**dadurch gekennzeichnet,**
**dass** die Bodenbearbeitungswerkzeuge (3) aus einer Reihe von aneinander flanschbaren Werkzeugen gebildet sind, welche beabstandet vom mittigen Rahmen (1) an zumindest einer Flanschnabe der Lagervorrichtung (2) oder gegeneinander geflanscht angeordnet sind.

9. Bodenbearbeitungsgerät nach vorstehenden Ansprüchen,
**dadurch gekennzeichnet,**
**dass** das Fahrwerk (14) am mittigen Rahmen (1) befestigt ist und die Transportachsen (16) abnehmbar oder aushebbar ausgebildet sind.

10. Bodenbearbeitungsgerät nach vorstehenden Ansprüchen,
**dadurch gekennzeichnet,**
**dass** das Fahrwerk (14) am äußeren Ende der Bodenbearbeitungswerkzeuge (3) befestigt ist und das Fahrwerk (14) oder dessen Transportachsen (16) abnehmbar und / oder aushebbar ausgebildet sind.

11. Bodenbearbeitungsgerät nach vorstehenden Ansprüchen,
**dadurch gekennzeichnet,**
**dass** die Transportachsen mittels einem oder mehrerer Radarme (21) schwenkbar oder verschiebbar am Mittelrahmen (1) angeordnet sind.

12. Bodenbearbeitungsgerät nach vorstehenden Ansprüchen,
**dadurch gekennzeichnet,**
**dass** die Aushub-, Schwenk- oder Verschiebebewegung des Fahrwerkes (14) oder der Radarme (21) mittels zumindest eines Aktors (22) ausgeführt oder eingeleitet wird.
